# EUROPEAN PATENT APPLICATION

(11) **EP 2 301 780 A1**
(43) Date of publication of application: **30.03.2011**
(21) Application number: 10011302.6
(22) Date of filing: 28.09.2010
(51) Int. Cl.: B60H 3/00

(54) **Blowing device including an electrostatic atomizer**

(30) Priority: 29.09.2009 JP 2009225399
(71) Applicant: Panasonic Electric Works Co., Ltd., Kadoma-shi Osaka (JP)
(72) Inventor: Yano, Takeshi, Kadoma-shi, Osaka (JP); Sugawa, Akihide, Kadoma-shi, Osaka (JP)
(74) Representative: Samson & Partner

(57) **Abstract**

1. A blowing device (5), comprising:
an air flow path (2) with an outlet (1) from which to inject an air stream;
an electrostatic atomizer (3), arranged outside the air flow path (2), for generating charged water particles by electrostatic atomization, the charged water particles generated in the electrostatic atomizer (3) being supplied into the air flow path (2) through a communication path (4); and
a honeycomb filter (6) arranged within the communication path (4), the honeycomb filter (6) containing active carbon.
2. The blowing device of claim 1, wherein the honeycomb filter (6) is charged with the same polarity as the polarity of the charged water particles by applying a voltage to the honeycomb filter.

## Description

### Field of the Invention

The present invention relates to a blowing device with an electrostatic atomizer for generating charged water particles by electrostatic atomization.

### Background of the Invention

Conventionally, there is known an arrangement in which charged water particles of nanometer size generated in an electrostatic atomizer are fed into the room of an automotive vehicle or the room of a building together with an air stream discharged from the outlet of a blowing device such as a vehicle-mounted air conditioning device.

The charged water particles of nanometer size fed into the room contain radicals such as superoxide radicals or hydroxy radicals. Thus, the charged water particles are capable of removing odor components adhering to the walls, seats, dashboards or curtains arranged within the room, deactivating allergen materials such as pollen or the like adhering to a human body or clothes and brought into the room, and moisturizing the skin or the hair.

For example, Japanese Patent Application Publication Nos. 2008-37247 and 2007-163109 disclose an arrangement in which charged water particles of nanometer size generated in an electrostatic atomizer are fed into a vehicle room through the outlet of a blowing device to carry out deodorization, sterilization and deactivation of allergen materials with radicals such as superoxide radicals or hydroxy radicals contained in the charged water particles, thereby making the vehicle room a pleasant space.

The charged water particles of nanometer size are generated by supplying water to a discharge electrode of an electrostatic atomizer and applying a high voltage to the water. At this time, ozone is also generated by air discharge upon the generation of the charged water particles. The charged water particles and the ozone thus generated are fed into the vehicle room.

Since the concentration of ozone is high near the outlet of the blowing device, the odor of ozone may irritate one's nerves.

### Summary of the Invention

In view of the above, the present invention provides a blowing device with an electrostatic atomizer capable of, with a simple configuration, preventing the odor of ozone from irritating one's nerves near the outlet of an air flow path.

In accordance with an aspect of the present invention, there is provided a blowing device, including: an air flow path with an outlet from which to inject an air stream; an electrostatic atomizer arranged outside the air flow path for generating charged water particles by electrostatic atomization, the charged water particles generated in the electrostatic atomizer being supplied into the air flow path through a communication path; and a honeycomb filter arranged within the communication path, the honeycomb filter containing active carbon.

By arranging the honeycomb filter containing active carbon in the communication path, it is possible for the honeycomb filter to, when supplying the charged water particles into the air flow path, adsorb the ozone generated by air discharge when the charged water particles are generated. The charged water particles are supplied into the air flow path and then injected from the outlet together with the air stream flowing through the air flow path. This makes it possible to prevent the odor of ozone from irritating one's nerves. It may be thinkable that, for the adsorption of ozone, the honeycomb filter is arranged at the downstream side of the portion of the air flow path communicating with the communication path. This is however undesirable because the air stream flowing through the air flow path undergoes pressure loss. If the honeycomb filter containing active carbon is arranged in the communication path as in the present invention, it is possible for the honeycomb filter to adsorb the ozone while preventing occurrence of pressure loss in the air stream flowing through the air flow path.

The honeycomb filter may be charged with the same polarity as the polarity of the charged water particles by applying a voltage to the honeycomb filter.

With this configuration, it is possible to prevent the charged water particles from adhering to and being adsorbed by the honeycomb filter. Only the non-charged ozone is adsorbed by the honeycomb filter. This makes it possible to supply the charged water particles into the air flow path with no loss and with no likelihood of the charged water particles adhering to the honeycomb filter.

With the present invention, the honeycomb filter containing active carbon is arranged in the communication path as set forth above. The charged water particles generated by the electrostatic atomizer are injected into a target space from the outlet together with the air stream flowing through the air flow path of the blowing device. Therefore, the present blowing device is capable of, with a simple configuration, adsorbing the ozone generated simultaneously with the generation of the charged water particles, preventing the odor of ozone from giving off near the outlet and preventing occurrence of pressure loss in the air stream flowing through the air flow path.

### Brief Description of the Drawings

The objects and features of the present invention will become apparent from the following description of embodiments, given in conjunction with the accompanying drawings, in which:
Fig. 1 is a schematic configuration view showing a blowing device according to one embodiment of the present invention;
Fig. 2 is a perspective view showing one example of a honeycomb filter employed in the blowing device; and
Fig. 3 is a section view of the honeycomb filter employed in the blowing device.

### Detailed Description of the Preferred Embodiments

One embodiment of the present invention will be now described with reference to the accompanying drawings.

In the accompanying drawings, an air conditioning device 5a provided in a vehicle such as a car is shown as one example of the present blowing device 5.

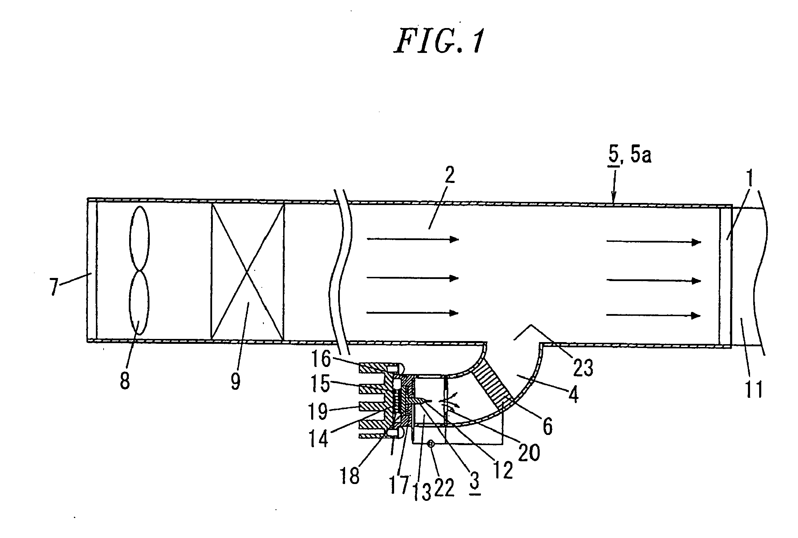

Referring to Fig. 1, the air conditioning device 5a includes an air flow path 2, a blowing fan 8 and a heat exchanger 9, the latter two of which are arranged within the air flow path 2. The upstream end portion of the air flow path 2 serves as an inlet 7 through which to draw the air present in an outdoor area or the air present in an indoor area (or a vehicle room) 11. The downstream end portion of the air flow path 2 serves as an outlet 1 through which to inject the conditioned air into the indoor area 11.

The heat exchanger 9 provided in the air conditioning device 5a is used to condition, namely cool or heat, the air blown by the blowing fan 8. In the present embodiment, an evaporator and a heater are used as the heat exchanger 9.

An electrostatic atomizer 3 is arranged outside the air flow path 2 and is in communication with the air flow path 2 through a communication path 4.

A communication hole 23 is formed on the wall portion of the air flow path 2 at the downstream side of the heat exchanger 9 or the blowing fan 8 and at the upstream side of the outlet 1. The downstream end portion of the communication path 4 is in communication with the communication hole 23.

As shown in Fig. 1, the electrostatic atomizer 3 is arranged outside the air flow path 2 and is mounted to a duct defining the air flow path 2 or other members. Thus, the electrostatic atomizer 3 is of a so-called externally mounted type.

The electrostatic atomizer 3 includes a discharge electrode 12, an atomization chamber 13 for accommodating the discharge electrode 12, a water supply unit 14 for supplying water to the tip end of the discharge electrode 12 and a high-voltage applying unit 22 for applying a high voltage to the water to generate charged water particles by electrostatic atomization. In the illustrated embodiment, the water supply unit 14 is configured to supply water to the discharge electrode 12 by cooling the moisture present in the air and generating dew condensation water through the use of a cooling unit such as a Peltier unit 15 or the like. This means that the cooling unit makes up the water supply unit 14 for supplying water to the discharge electrode 12.

In the illustrated embodiment, the internal space of a generally tubular body case 16 with an insulating property is divided by a partition 17. The Peltier unit 15 as the water supply unit 14 is built in one half space of the body case 16 divided by the partition, while the other half space of the body case 16 is used as the atomization chamber 13.

The Peltier unit 15 includes an insulating pate made of alumina or aluminum nitride having high heat conductivity, a pair of Peltier circuit boards arranged on one surface of the insulating plate such that the circuits thereof face each other and a plurality of BiTe-based thermoelectric elements interposed between the Peltier circuit boards. The thermoelectric elements adjoining to each other are electrically connected to each other using the circuits thereof. The Peltier unit 15 is configured to ensure that heat can move from one of the Peltier circuit boards toward the other when an electric current is fed to the thermoelectric elements through a Peltier input lead line. A cooling part 18 is connected to the outer side of one of the Peltier circuit boards and a radiating part 19 is connected to the outer side of the other Peltier circuit board. In the present embodiment, radiator fins are used as the radiating part 19.

The rear end portion of the discharge electrode 12 is connected to the cooling part 18 of the Peltier unit 15. The discharge electrode 12 protrudes into the atomization chamber 13 through a hole formed in the partition 17 of the body case 16.

In the embodiment shown in Fig. 1, a ring-shaped opposite electrode 20 is arranged in the leading end opening of the tubular body case 16. The opposite electrode 20 may be omitted, if appropriate.

Openings opened inwards and outwards are formed at a plurality of circumferentially spaced-apart points on the surrounding wall of the atomization chamber 13 of the body case 16.

The tubular communication path 4 is connected at one end to the leading end of the tubular body case 16. The ring-shaped opposite electrode 20 has a central hole communicating with the communication path 4.

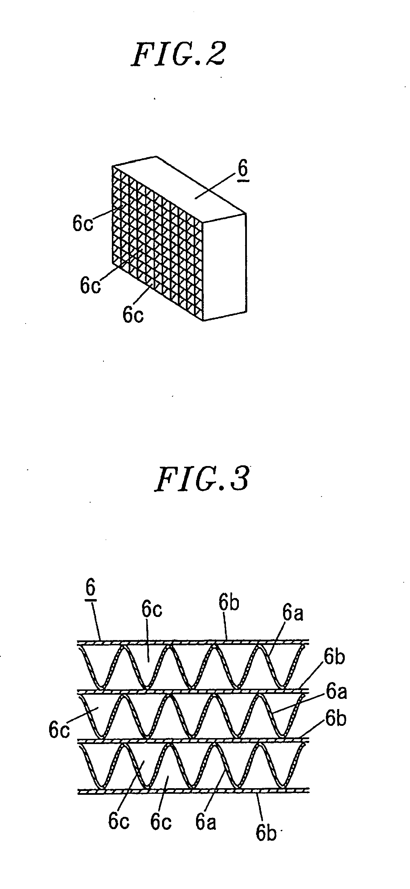

A honeycomb filter 6 containing active carbon is provided in the communication path 4. The honeycomb filter 6 is of the type shown in Fig. 2. The honeycomb filter 6 includes a plurality of wavy sheets 6a with ridges and valleys and a plurality of planar sheets 6b, both of which are made from a film containing active carbon. As shown in Fig. 3, the wavy sheets 6a and the planar sheets 6b are alternately superimposed and formed into a honeycomb shape having a plurality of isolated spaces 6c opened at the opposite ends thereof.

The honeycomb filter 6 containing active carbon is arranged within the communication path 4 such that the opposite openings of the isolated spaces 6c are opened toward the upstream and downstream sides of the communication path 4.

In the embodiment illustrated in Fig. 1, the electrostatic atomizer 3 is arranged outside the wall of the air flow path 2 such that the needle-shaped discharge electrode 12 extends parallel to the wall of the air flow path 2. Thus, the tubular body case 16 remains parallel to the adjoining wall of the air flow path 2. The body case 16 is connected to the communication hole 23 of the wall of the air flow path 2 by the communication path 4 of arc shape. Accordingly, the electrostatic atomizer 3 is arranged outside the air flow path 2 in a compact fashion. Moreover, it is possible to smoothly supply the charged water particles into the air flow path 2.

Upon operating the air conditioning device 5a, the blowing fan 8 is operated to draw the air present in the outdoor area (outside a vehicle) or the air present in the indoor area (inside a vehicle) 11 into the air flow path 2 through the inlet 7. The air is conditioned by the heat exchanger 9 to have a specified temperature and is injected into the indoor area 11 through the outlet 1 after flowing through the air flow path 2.

If the electrostatic atomizer 3 is operated during the operation of the air conditioning device 5a, an electric current is fed to the Peltier unit 15 to cool the cooling part 18. Upon cooling the cooling part 18, the discharge electrode 12 is cooled to condensate the moisture present in the air, as a result of which water (dew condensation water) is supplied to the tip end of the discharge electrode 12. In this state, a high voltage is applied to the water supplied to the tip end of the discharge electrode 12, whereby the level of the water supplied to the tip end of the discharge electrode 12 is partially built up in a conical shape by the application of the high voltage to form a Taylor cone. Electric charges are concentrated on the tip end of the Taylor cone thus formed. Thus, the intensity of electric fields becomes stronger at the tip end of the Taylor cone, thereby causing the Taylor cone to further grow up. If the Taylor cone grows up in this way and if the electric charges are concentrated on the tip end of the Taylor cone to increase the density thereof, the water present at the tip end of the Taylor cone is applied with a great deal of energy (namely, the repellant force of the electric charges having the increased density) and is subjected to repetitive division and scattering (Rayleigh division), thus generating a large quantity of negatively charged water particles of nanometer size.

Ozone is also generated when the charged water particles are generated by the electrostatic atomization.

The charged water particles and the ozone generated in the electrostatic atomizer 3 move along the communication path 4. When passing through the isolated spaces 6c of the honeycomb filter 6 arranged in the communication path 4, the charged water particles and the ozone adhere to the honeycomb filter 6. Due to the adherence of the charged water particles, the honeycomb filter 6 is gradually charged with the same polarity as that of the charged water particles. Then, since the charged water particles passing through the isolated spaces 6c have the same polarity as that of the honeycomb filter 6 to be repelled by the honeycomb filter 6, they are fed into the air flow path 2 from the communication hole 23 through the isolated spaces 6c without adhering to the honeycomb filter 6 and is then supplied into the indoor area (the vehicle room) 11 form the outlet 1 of the air flow path 2 together with the air stream flowing through the air flow path 2.

The charged water particles of nanometer size fed into the indoor area 11 drift within the indoor area 11 and adhere to the inner walls, seats, dashboards or curtains arranged inside the indoor area 11 and the clothes or hair of a man.

The charged water particles of nanometer size (i.e., the nano size mist) generated by atomizing water contain radicals such as superoxide radicals or hydroxy radicals. Thus, the charged water particles are capable of removing odor components adhering to the inner walls, seats, dashboards or curtains arranged within the indoor area 11 and the clothes or hair of a man dwelling within the indoor area 11. In addition, the charged water particles are capable of deactivating allergen materials such as pollen or the like adhering to a human body or clothes and brought into the indoor area 11, performing sterilization or disinfection and moisturizing the skin or the hair. Since the charged water particles are small as nanometer size, they can drift from place to place within the indoor area 11 and can infiltrate into fibers or the like to perform deodorization, sterilization, disinfection and deactivation of allergen materials.

As set forth above, the charged water particles adhere to the honeycomb filter 6 only at the initial stage. Once the honeycomb filter 6 is charged with the same polarity as that of the charged water particles by the adherence of the latter, the charged water particles are repelled by the honeycomb filter 6 and are supplied into the air flow path 2 without adhering to the honeycomb filter 6. Meanwhile, the ozone is not electrically charged, so that it continues to be adsorbed to the honeycomb filter 6 containing active carbon.

This helps reduce the quantity of the ozone discharged from the outlet 1, which makes sure that the odor of ozone is not caught even near the outlet 1 within the indoor area 11.

Alternatively, the honeycomb filter 6 may be charged with the same polarity as that of the charged water particles generated in the electrostatic atomizer 3 by applying a voltage to the honeycomb filter 6 during the operation of the electrostatic atomizer 3 as shown in Fig. 1. By doing so, it is possible to prevent the charged water particles from adhering to and being adsorbed by the honeycomb filter 6 at the initial stage of operation of the electrostatic atomizer 3. Only the non-charged ozone is adsorbed by the honeycomb filter 6. This makes it possible to supply the charged water particles into the air flow path 2 with no loss even at the initial stage of operation of the electrostatic atomizer 3.

While the air conditioning device 5a for a vehicle such as a car or the like has been illustrated described as an example of the blowing device 5 in the foregoing embodiment, the present invention is not limited thereto. Alternatively, the blowing device 5 may be an air conditioning device arranged within the room of a building or a blower having only a blowing function with no use of the heat exchanger 9.

While the invention has been shown and described with respect to the embodiments, it will be understood by those skilled in the art that various changes and modifications may be made without departing from the scope of the invention as defined in the following claims.

## Claims

1. A blowing device, comprising:
an air flow path with an outlet from which to inject an air stream;
an electrostatic atomizer, arranged outside the air flow path, for generating charged water particles by electrostatic atomization, the charged water particles generated in the electrostatic atomizer being supplied into the air flow path through a communication path; and
a honeycomb filter arranged within the communication path, the honeycomb filter containing active carbon.

2. The blowing device of claim 1, wherein the honeycomb filter is charged with the same polarity as the polarity of the charged water particles by applying a voltage to the honeycomb filter.
